(19)

Europäisches
Patentamt
European
Patent Office
Office européen
des brevets

(11) **EP 3 444 773 A1**

(12) **EUROPEAN PATENT APPLICATION**

(43) Date of publication:
**20.02.2019 Bulletin 2019/08**

(51) Int Cl.:
**G06Q 50/04** *(2012.01)*

(21) Application number: **17186673.4**

(22) Date of filing: **17.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ABB Schweiz AG
5400 Baden (CH)**

(72) Inventors:
• **Luotojarvi, Mika
  02730 Espoo (FI)**

• **Vihtari, Tomi
  04500 Kellokosk (FI)**
• **Hyttinen, Riku
  04230 Kerava (FI)**
• **Saarela, Antti
  03400 Vihti (FI)**
• **Karhu, Panu
  00720 Helsinki (FI)**
• **Rista, Visa
  00550 Helsinki (FI)**

(74) Representative: **Kolster Oy Ab
Salmisaarenaukio 1
P.O. Box 204
FI-00180 Helsinki (FI)**

(54) **SCHEDULING MANUFACTURING PROCESS OF PARALLEL MACHINES**

(57)     A general aspect of the invention uses an ordered product list and product-specific ordered suitability list of machines. First, the products to be manufactured are initially allocated to production queues of the machines. Then fill factors for each machine and a target fill factor level are calculated. The products are then allocated one by one, according to the order in the ordered product list, to a production queue of one of the machines, that is selected based on the fill factors, the target fill factor level, and suitability and availability of the machines. The fill factors and the target fill factor level are recalculated after the product has been allocated and before allocating the next product.

*FIG.2*

EP 3 444 773 A1

**Description**

FIELD

The present invention relates to scheduling manufacturing of a set of products to be manufactured in a production line comprising a plurality of parallel machines.

BACKGROUND ART

In the manufacturing industry, like paper, metal, textile and chemical industry, the production process consists of several production stages with corresponding semi-finished products and end products. Usually, especially in paper mills, there are production lines in which a heterogeneous mix of different types of machines are used to produce from a semi-finished product a plurality of different end products. For example, a set of finishing machines, some of which may be similar and some of which may be different to each other, in a paper mill may be used for cutting rolls manufactured by one machinery into customer-specific rolls and into customer-specific sheets whose size and number to be produced are specified by corresponding customer orders defining the wanted end product(s). Further, the production capacity of a single finishing machine may also vary depending on the properties of the end product to be manufactured, and there may be finishing machines that cannot be used to manufacture one or more specific end products. The versatile demand on different end products with different production time windows and a need to minimize times when a machine is not manufacturing anything while there are end products to be manufactured creates challenges to automatic machine scheduling of the manufacturing process.

SUMMARY

An object of the present invention is to increase productivity by balancing workload of a plurality of heterogeneous machines while allocating each product to be manufactured by the best suitable machine available at a given time. The object of the invention is achieved by a method, a computer program product, a controlling apparatus and a system, which are characterized by what is stated in the independent claims. The preferred embodiments of the invention are disclosed in the dependent claims.

A general aspect of the invention uses an ordered product list and product-specific ordered suitability list of machines. First, the products to be manufactured are initially allocated to production queues of the machines. Then fill factors for each machine and a target fill factor level are calculated. The products are then allocated one by one, according to the order in the ordered product list, to a production queue of one of the machines, that is selected based on the fill factors, the target fill factor level, and suitability and availability of the machines. The fill factors and the target fill factor level are recalculated after the product has been allocated and before allocating the next product.

BRIEF DESCRIPTION OF THE DRAWINGS

In the following, exemplary embodiments will be described in greater detail with reference to accompanying drawings, in which

Figure 1 shows a simplified a system with a block diagram of an exemplified apparatus;
Figures 2 to 5 are flow charts illustrating functionalities;
Figures 6A and 6B illustrate schedules;
Figures 7 and 8 are flow charts illustrating exemplary functionalities; and
Figure 9 is a schematic block diagram.

DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any manufacturing system in which a plurality of machines may process parallel a semi-finished product from one source to a variety of end products and in which automatic scheduling of the heterogeneous. An example is a production line in a paper mill, the production line comprising a heterogeneous mix of different types of machines used for producing several types of end products.

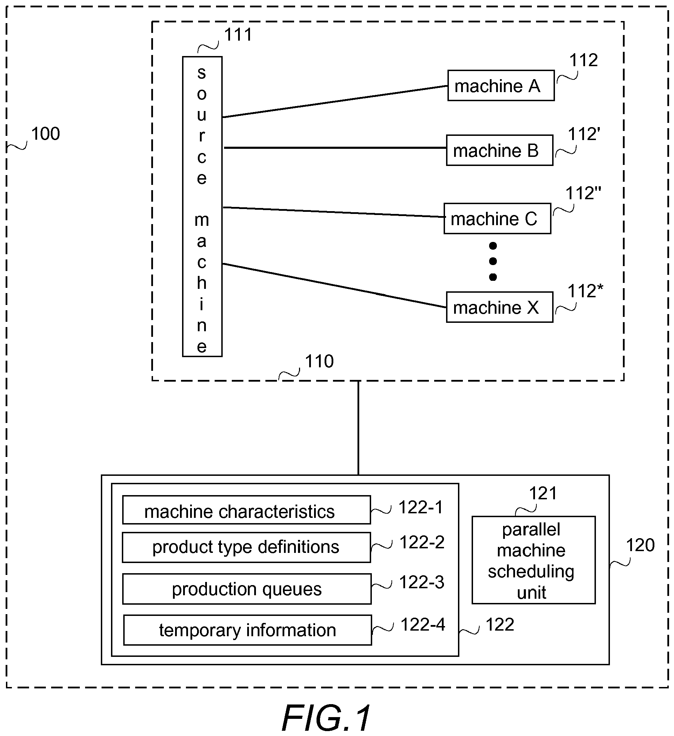

A general exemplary architecture of a system is illustrated in Figure 1. Figure 1 is a simplified system architecture only showing some devices, apparatuses and functional entities, all being logical units whose implementation and/or number may differ from what is shown. The connections shown in Figure 1 are logical connections; the actual physical connections may be different. It is apparent to a person skilled in the art that the systems also comprise other apparatuses and, devices.

In the example illustrated in Figure 1, the system 100 comprises one or more production lines 110 (only one is illustrated) and one or more production control apparatuses 120 (only one is illustrated) controlling what is produced on the production line(s) 110.

In the illustrated example the production line 110 comprises one source machine 111 and a plurality of machines 112, 112', 112", 112* that may parallel process a semi-finished product from the source machine 111 to one or more different end products. It should be appreciated that the semi-finished product from the source machine 111 is an end product of the source machine 111, which in turn may have received a semi-finished product from another source machine. Further, any of the plurality of machines 112, 112', 112", 112* may in turn be a source machine to a set of plurality of further machines that may process in parallel the end product of the corresponding machine 112, 112', 112", 112*. For example, as described in the background portion, a set of finishing machines in a paper mill may be used for cutting rolls into smaller rolls and into sheets. The semi-finished product, i.e. source material for a finishing machine, is a produced roll called "mother roll" and the output of the finishing machine, i.e. its end product, is a product which can be either packed and shipped or directed to further processing. The size and number of the end products to produce are originally specified by customer orders defining wanted end products, and usually, but not necessarily, also when the end products are needed. The reason for parallel finishing machines arises on the fact that cutting is in general a slow process compared to production of the mother roll, and therefore several parallel finishing machines may be required for keeping the finishing department up to pace.

A production control apparatus 120 is a computing device (node) configured at least to send control data to machines in production line(s) 110 it controls, and to receive data required for generating the control data, either as a standalone device or as part of a production control system. Depending on production line, the production control apparatus may be a small electrical device, a personal computer, or a server, just to mention some examples.

The production control apparatus 120 is configured to support manufacturing scheduling for machines operating in parallel in a heterogeneous environment. For this purpose, the production control apparatus 120 illustrated in Figure 1 comprises one or more parallel machine scheduling units 121, and in a memory 122 machine characteristics 122-1, product type definitions 122-2, production queues 122-3, or at least space for production queues, and temporary information 122-4, or at least space for temporary information. Naturally, although not illustrated the production control apparatus 120 may comprise one or more user interfaces.

As there may be several different types of end products, the production line may comprise a heterogeneous mix of different types of finishing machines. That naturally means different machine characteristics. The production capacity and speed of a single machine may also vary depending on properties of the product to be manufactured. Herein it is assumed that the properties of the product to be manufactured absorb also variations caused by different semi-finished products, i.e. source materials. (A "product to be manufactured" is herein used as a synonym to a concept called "job" that is used for manufacturing steps of a machine that are performed to process a semi-finished product to an end product and required settings of the machine to perform the steps). Thus, the diversity of end products may also lead to different characteristics and production speeds between the machines. For example, a finishing machine may have a speed curve where maximal production speed varies as a function of cut size length, number of lanes and the number of raw material units processed at the same time. Therefore, when the optimization of schedule of products, and corresponding batches, on a set of parallel finishing machines is considered, several constrains and relaxations may have to be considered. Each ordered product may have several properties that limit the choice of viable machines. In other words, each product can be produced on a subset of the available machines in the production line. The subset may be one machine only, several machines or all of the machines in the production line. Moreover, each product may fit to be produced (manufactured) some machines better than others, thus having different production and change times within available machines. Each product may have a machine dependent production time which can vary greatly from one machine to another. Each of the parallel machines may have individual constraints and different processing times for each product type. The processing times may be affected by machine characteristics as well as the product properties. Thus, each machine m in the plurality of parallel machines may have machine characteristics that define a subset $J_m$ of product types manufacturable on the machine $m$. In other words, in some cases, one or more machines may be unable to manufacture one or more product types in the set of product type definitions J. Furthermore, the change time between product types may be non-constant, depending on the machine and the sequence of the products in the queue.

To take into account the different variables, in the illustrated example the machine characteristics 122-1 and the product type definitions 122-2 are used. Naturally, any other way to maintain or obtain corresponding information may be used.

Machine characteristics 122-1 may comprise for each machine whose production, or at least scheduling, the control apparatus controls, i.e. in the example illustrated in Figure 1, at least for machine A 112, machine B 112', machine C 112", ..., machine X 112*, machine -specifically at least following information:

- supported product types with time information
- production times for the supported product types
- change time information, for example "if previous product type is M, change time is x", or "changing from initial state to manufacturing state of a product type R takes y minutes and changing from the manufacturing state of the product type R takes q minutes".

Product type definitions 122-2 may comprise for each different product type that can be manufactured on the production line a production definition comprising a set of properties that define the product and possible what is needed to manufacture the product, such as settings in the machine, or tools needed in machine. In one embodiment, the product type definitions are temporary definitions comprising time related information, such as when the products of the type needs to be ready, and/or when their semi-finished product is ready so that the production can start.

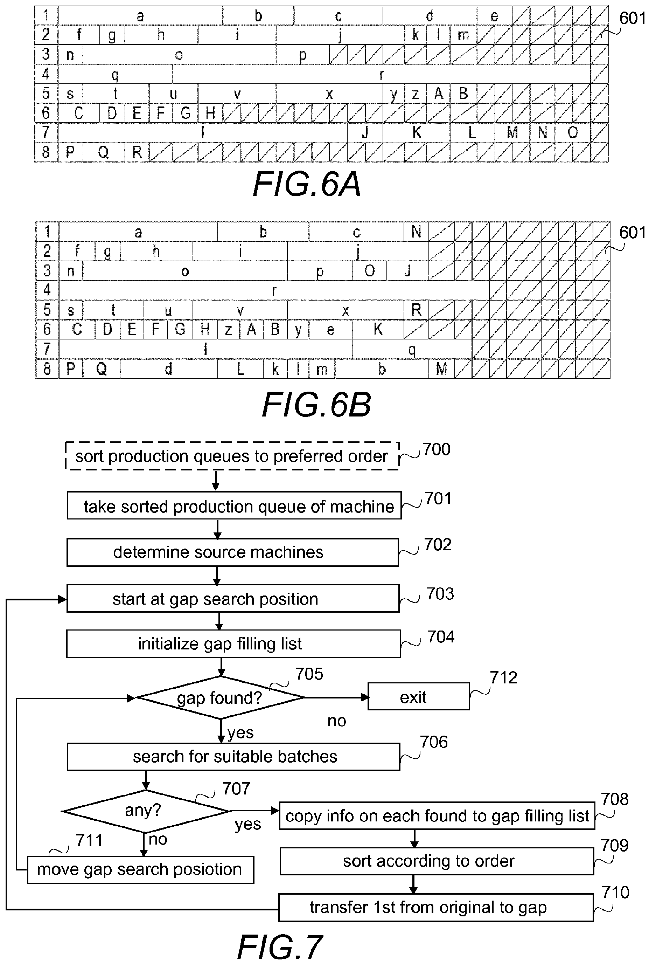

Examples of productions queues 122-3 and what may be in the temporary information 122-4 will be described in more detail below. Herein it is assumed that production queues are maintained machine-specifically, a production queue being divided into time slots, a time slot being denoted by 601 in Figure 6A and in Figure 6B, the time slots of the parallel machines being synchronous in time. There are no restriction on the size of the time slot. Further, the time slots in different production queues may have different sizes, i.e. they need not to be synchronous in time. However, if the time slots are used as in the examples below to determine the accuracy of scheduling and to enable an easy balancing, the time slots should not be too big, and preferable have equal size in all production queues.

It should be appreciated that any other way than the one described herein to store a piece of information may be used.

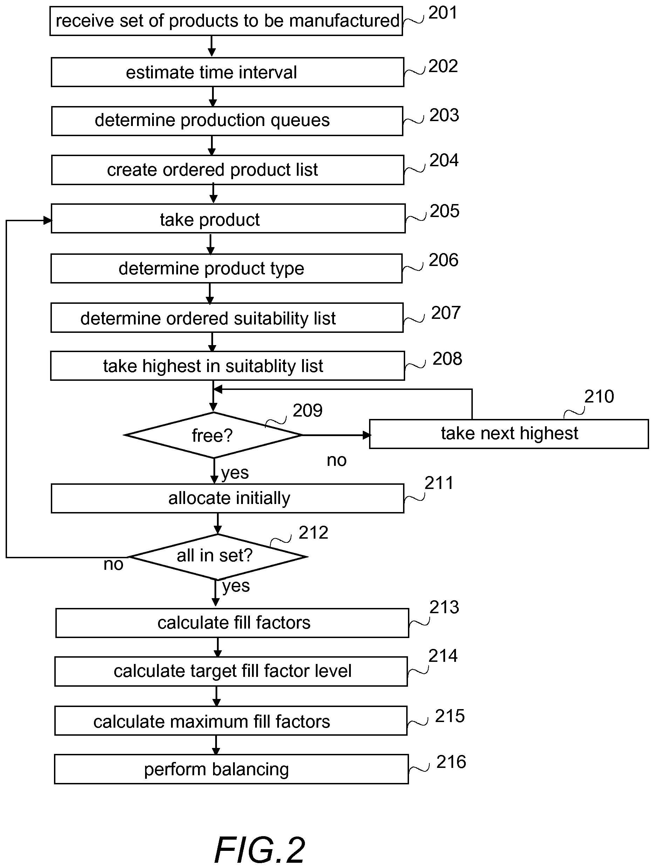

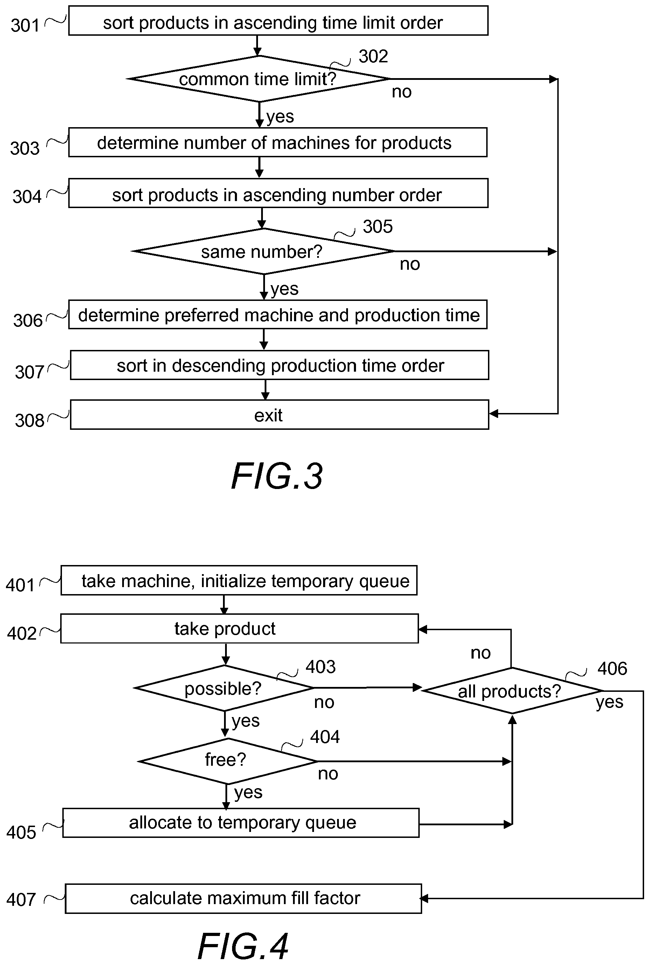

Basic functionality of the production control apparatus, or more precisely, the parallel machine scheduling unit, is described below with Figures 2 to 5; Figure 2 illustrating the overall scheduling process and Figures 3, 4 and 5 a more detailed examples of some steps in Figure 2. In the solution described with Figures 2 to 5, results in different phases illustrated in Figures 6A and 6B, the products are allocated to the machines in a certain fixed sequence. A motivation for the strategy is that each product would be allocated in a single-pass type of iteration, without the need to iterate and transfer (move) the products back and forth. This approach has benefits of being fast and guaranteed not to be stuck in endless loops going from one local optimum to another. It can also make the allocation strategy easier to follow and develop further due to inherent simplicity. The set of products may be sorted on the basis of the product properties of their product definitions and machine suitability lists. The products in the set of products may then be allocated to production queues, which also may be called as job queues, in a sequence defined by the sorted set of products. A machine to manufacture a particular product may be determined on the basis of the fill factors and target fill factor levels. The fill factors and desired fill factor levels may be recalculated as the products are allocated to the production queues. In other words, the products are allocated to their respective machines using an allocation strategy described below.

In the examples below it is assumed that a batch processing is used for the scheduling, meaning that products to be manufactured based on customer orders are not fed in real-time to the production control system, or to the production control apparatus, but at certain intervals, without limiting embodiments to such a solution. It is a straightforward process for one skilled in the art to implement the described examples to a solution in which products to be manufactured are fed in real-time to the production control system (and apparatus).

Referring to Figure 2, a set of products to be manufactured is received in step 201. The set may be in a form of a list in which several orders from one or more customers are collected and transformed to indicate what end products are to be manufactured. The set may be stored to the temporary information during the processing of the set.

A time interval is estimated in step 202. The time interval estimation may comprise product-specific time interval estimations. The reason for estimation is that the time of planned production for each product cannot be determined before the balancing and scheduling of the products. To overcome this, the production time of each product may initially be assumed to be on a certain time interval. For example, the time of planned production may be selected to be the day before the due date. In this context, the term "due date" refers to a time instant called a target time, a deadline before which the product should, i.e. is desired, be completed. Alternatively, the time of planned production may be selected to be the day after the release date. Release date in this context refers to the first possible time instant when raw material, such as the semi-finished product, is ready for production and a production of an product can start The latter practice is useful when the production is aimed at minimizing the size of a middle-storage between raw materials and the finishing equipment, for example. Other time intervals for the time of planned production may also be used. Still a further possibility that may be used instead of the previous ones, or with them to modify the time interval, is to use time interval parameter, which may have a default value that can be overridden by a user input. A suitable value of the time interval parameter to be used in the workload balancing may depend on the requirements of the production facility. One motivation for the workload balancing of the finishing machines may be a requirement to keep the workload of the staff operating the machines close to equal, for example. In this context, the use of a fairly short time interval, for example three days, may be advantageous as it balances the current and future workload over a relatively short time. This assures that no large differences in the workloads over the machines are allowed even temporarily. On the contrast, if the total planned workload of the machines is required to be in good balance, a much longer time interval may be used. A long balancing time interval may drive the total runtime of all machines towards a common equal percentage. This approach allows even fairly large temporal differences in the workloads, as the emphasis is on the total amount.

Then production queues are determined by obtaining (retrieving) from the memory in step 203, or at least production queues starting from the time moment the processing started. The estimated time interval may be used to determine the start and end time of the production queues, or the queues may be assumend to be endless. Alternatively, a production queue is determined by forming a production queue for each machine. Further, depending on an implementation, there may be at least both an initial production queue for each machine and an actual (final) production queue (scheduling queue) for each machine.

Then an ordered product list is created in step 204, as will be described in more detail with Figure 3, from the received set of products. The ordered product list is preferably stored as a temporary information.

Then a product in the ordered product list is taken in step 205 to be initially scheduled, the product taken being in the ordered product list the highest not yet scheduled product. Then the product type of the product is determined in step 206 and an ordered suitability list of machines that can manufacture the product is determined in step 207. The ordered suitability list may also called a prioritized routing list. The use of the ordered suitability list limits the search space of possible combinations of machines and products. The ordered suitability list contains all feasible machines in a suitability (priority) order, or more precisely all feasible machines in a descending suitability order. In other words, the better to machine is suited for producing the product the smaller the rank in the list. The suitable machines may be determined based on the supported product type information in the machine characteristics, or they may be deduced by comparing product properties with machine characteristic. The machine characteristics may contain in the supported product type information a suitability indicator, that can be used to determine the order, and/or the suitability order may be determined based on the production times, a combination of production times and change times, for example. Further, the product type of previous scheduled product to a machine may affect to the suitability. Still a further possibility is that the product type definitions contain product type -specifically the ordered suitability list, in which case the determining in step 207 means obtaining/retrieving the information.

Then the highest machine in the ordered suitability list in taken in step 208 in in step 209 it is checked, whether in the corresponding production queue there is enough free space, i.e. not yet allocated time slots corresponding the production time of the product and if there is already an initially allocated product of different type, also for the change time, also called as machine time available. If not (step 209: no), the next highest machine in the ordered suitability list is taken in step 210, and the check of whether there is enough free time is repeated to the machine in question.

If there is enough free time (step 209: yes), the necessary amount of time slots are initially allocated in step 211 for the production of the product from the production queue. Then it is checked, in step 212, whether or not all products to be manufactured in the set received in step 201 are initially allocated to a machine, and more precisely, to a production queue of the machine. If not (step 212: no), the process returns to step 205 to take a product.

If all products in the set received are initially allocated (step 212: yes), the production queues may look as those illustrated in Figure 6A. In Figure 6A production queues for machines 1 to 8 are illustrated, each row being a corresponding production queue of a machine during the estimated time interval. A time slot 601 with a transverse line in Figure 6A depicts a free time slot.

However, to have a more balanced workload, couple of auxiliary variables are calculated. In the illustrated example an auxiliary variable called fill factor is calculated in step 213. The fill factor for each time interval and for each machine may be calculated as a fill factor percentage representing a ratio between production time, i.e. machine time required for producing corresponding products allocated within an estimation time interval, and machine time available during estimation time interval.

For example, a fill factor percentage $ff_{md}$ for each time interval for each machine may be calculated using formula (1):

$$ff_{md} = 100 * \frac{\sum_{\hat{i}}^{O} T^{p}_{\hat{i}m}}{\sum_{\hat{t}=d}^{d+n} T^{m}_{\hat{t}}} \qquad (1)$$

where

$ff_{md}$ is a fill factor percentage for time interval for each machine;
$m$ is a machine index;
$d$ is a time interval index, whose first value indicates a time slot wherefrom the time interval begins;
$n$ is the length of time interval;

$T^m_t$ is the available machine time of machine $m$ during time interval t;
$TP_{im}$ is the production time of product $i$ on machine $m$, calculated using following formula (2):

$$T^p{}_{im} = \begin{cases} T^p{}_{im} & if\ e^i \in I \\ 0 & otherwise \end{cases} \qquad (2)$$

where

$TP_{im}$ is the production time of product $i$ on machine $m$;
$e^i$ is the production time of product $i$; and
$I$ is time interval between by $d$ and $d+n$.

Depending on an implementation, the production time $T^P{}_{im}$ may or may not comprise a possible change time.
In the illustrated example, on the basis of the calculated fill factors, a target fill factor level representing the target workload is calculated in step 214, also as an auxiliary variable. However, it is possible to calculate several target fill factor levels. In the case of evenly balanced workload, at least one target fill factor level may be calculated as an average of the calculated fill factor percentages. For example, an average fill factor percentage $ff_d$ over all machines available for each time interval $d$ may be calculated using formula (3):

$$\overline{ff_d} = \frac{\sum_{\widehat{m}}^{N_d} ff_{\widehat{m}d}}{N_d} \qquad (3)$$

where

$\overline{ff_d}$ is an average fill factor percentage over all machines available for each time interval d;
$ff_{md}$ is a workload percentage of machine $m$ on time interval $d$; and
$N_d$ is the number of machines available during the time interval $d$.

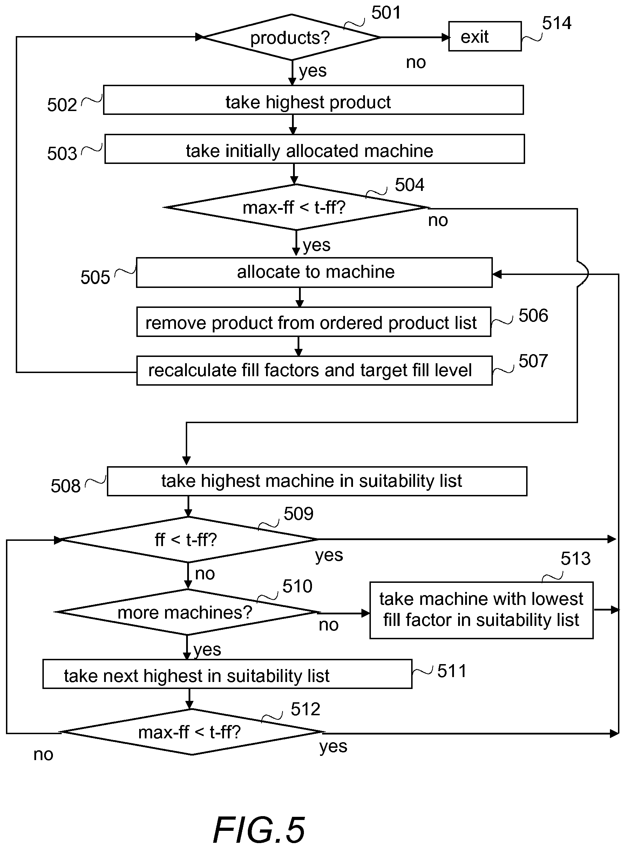

Further, maximum fill factors for each machine are calculated in step 215, more precisely as described with Figure 4, and then the balancing is performed in step 216, as described with Figure 5 in more detail.
After the balancing, the production queues of machines based on initial allocation, illustrated in Figure 6A will be more balanced, as illustrated in Figure 6B. As can be seen from Figures 6A and 6B, thanks to balancing productivity of the machines may be increased since manufacturing of the next set of products can be started earlier. Further, the load of the parallel machines remains equal, which in turn means that timing for maintenance, for example may be similar to all machines.
Using this information, several strategies may be used for optimizing the machine usage when even distribution of workload is set as the target. The difference of fill factors over the time intervals may be calculated and used as a cost function to be minimized. For example, but not limited to, the average root mean squared sum of differences ($\overline{RMSD}$) can be used to evaluate the performance of the product allocation strategy. In the example case the performance indicator $\overline{RMSD}$ is be computed using formula (4):

$$\overline{RMSD} = \frac{\sum_{d=t^s}^{t^e} \sqrt{\frac{\sum_m^{n_d}(ff_{md} - \overline{ff_d})^2}{n_d}}}{t^s - t^e} \qquad (4)$$

where

$\overline{RMSD}$ is the performance indicator;
$t^s$ is an index of the first time interval included in balancing;
$t^e$ is an index of the last time interval included in balancing;
$n_d$ is the number of machines available during time interval $d$;
$ff_{md}$ is the fill factor of machine $m$ on time interval $d$; and
$\overline{ff_d}$ is the average fill factor of available machines over time interval $d$.

Figure 3 illustrates an example how the ordered product list may be created. In the example it is assumed that the set of products to be manufactured comprises for each product at least one of a due date, i.e. a date by which the end product needs to be ready (manufactured), and a release date, i.e. a date at which the semi-finished product (source material) is available so that it can be used for manufacturing the product.

Referring to Figure 3, the products are first sorted in step 301 in an ascending time limit order, for example. Depending on an implementation, the time limit may be the due date, or the release date, or any other suitable time limit. When the time limit used is the due date (end product ready time) and the order is the ascending order, the products to be allocated (scheduled) are sorted, i.e. put to the ordered product list, so that the products that have their due dates the earliest will be allocated first. When the time limit used is the release date (source material ready time), and the order is the ascending order, the products to be allocated are sorted so, that the products that have their source materials ready the earliest are allocated first.

If there are products having (sharing) (step 302: yes) a common time limit (a common due date or a common release date), within a set of products sharing a common due date, the products may be sorted on the basis of the number of machines capable of performing the products. More precisely, for each such set, the following two steps are performed. For each product within the set, a number of machines capable to manufacture the product is determined in step 303, and then the products are sorted in step 304 in an ascending number order. This means that the product with the smallest number of capable (available) machines will be allocated first within the set of products having the common time limit. This gives maximum flexibility for the parallel machine scheduling unit to allocate the remaining products of the same time interval and hence the possibility to reach good balancing of the workloads.

If there are within a set of products having (sharing) a common time limit (a common due date or a common release date) a set of products having the same number of machines capable to manufacture the products (step 305: yes), within a set of products sharing the same number, the products may be sorted on the basis of a production time of a preferred machine to manufacture the product. More precisely, for each such set, a preferred machine is determined in step 306 with a corresponding processing time for each product within the set and then the products will be sorted in step 307 by a production time of the products, in a descending order, and then the process is exited in step 308 (i.e. the ordered product list have been created). The preferred machine may be determined based on the production time of the product in the machine, or the product type may contain an indication which machine is a preferable one, or the machine characteristics may indicate to which product type(s) the machine is the preferable one. The sorting in descending production time on the preferred machine gives the parallel machine scheduling unit a possibility to find fine-graded balance between machine workloads, as smallest quantification errors are faced while allocating the last relatively quickly produced products. If products with large production times would be allocated among the last products, the remaining products may not be sufficient to re-balance the workload. This would, at the end, lead to iteration cycles and reorganizing of already allocated products.

The process is also exited (step 308), if no products have a common time limit (step 302: no), or if no products within any set of products have the same number of machines capable to produce the product in question (step 305: no).

Figure 4 illustrates an example how a maximum fill factor may be calculated for each machine under each time interval. The maximum fill factor is the fill factor achieved when assuming that all possible products would be allocated to the machine at hand.

Referring to Figure 4, a machine to which the maximum fill factor is calculated is taken in step 401 to be processed, and a temporary production queue is initialized in step 401. Then a product in the ordered product list is taken in step 402, and it is checked in step 403, whether or not manufacturing the product by the machine is possible. For example, the product type of the product may be determined and machine characteristics indicating supported product types may be used to checked the possibility in step 403.

If it is possible to manufacture the product (step 403: yes), it is checked, in step 404 whether in a temporary production queue there is enough free space for this product. If there is (step 404: yes), the product is allocated in step 405 to the temporary queue for calculating purposes, not for scheduling the manufacture. Then it is checked in step 406, whether or not all products in the ordered product list have undergone the temporary assignment. If not (step 406: no), the process proceeds to step 402 to take a product in the ordered product list, and continues therefrom.

If it is not possible to manufacture the product (step 403: no), the process proceeds to step 406 to check, whether all products have undergone the temporary assignment.

If there is not enough free space (step 404501: no), the process proceeds to step 406 to check, whether all products have undergone the temporary assignment.

If all products have undergone the process (step 406: yes), the maximum fill factor for the machine is calculated in step 407. The maximum fill factor may be calculated as the fill factor percentage using formulas (1) and (2), for example.

Figure 5 illustrates one example how to perform the balancing of the workloads between different machines.

Referring to Figure 5, as long as there are products (step 501: yes) in the ordered product list created in step 204 of Figure 2, the product that is the highest in the list is taken in step 502 to be finally allocated. Then the machine that has been initially allocated in step 211 of Figure 2 to the product is taken in step 503 and in step 504 the maximum fill factor (m-ff) of the machine is compared with the target fill factor level (t-ff). The comparison is performed to detect a special situation where a machine would have a fill factor lower than the target fill factor level even if all the possible orders would be allocated to that machine. In other words, comparison of the maximum fill factor to the target fill factor level reveals the machines and time intervals where the machine cannot meet the target fill factor level set in the balancing strategy. This situation may be called as "under-filling". For machines and time intervals under these conditions, all possible products may be allocated to the under-filled machines to best balance the workloads between the machines. By detecting these under-filling situations helps achieving balanced workloads in a more straightforward style. However, the balancing may be performed without the check of step 504 but in that case, a desired balancing may be unachievable because products required for filling an under-filled machine even partially may already be allocated to another machine.

If the under-filling is detected, i.e. the maximum fill factor is lower than the target fill factor level (step 504: yes), the product is allocated in step 505 (permanently) to be manufactured by the machine by adding it to a production queue (scheduling queue) of the machine as a final allocation, and the product is removed in step 506 from the ordered product list.

The target fill factor level of each time interval of each machine may change during the execution of the balancing strategy, as the production time of each product varies from machine to machine. This in turn affects the fill factor and the target fill factor level, especially if a product is allocated to another machine than initially. Therefore, in the illustrated example every time a product is allocated to a machine, just to take into account a possibility that the product may be allocated to another machine, the fill factors and the target fill factor levels of the machines are (re)calculated in step 507 using the formulas (1), (2) and (3). In other words, the fill factors and the target fill factor levels are updated to take into account the recent allocation. There can be also time-consuming products whose production time span over the whole time interval or several time intervals. When such a product is allocated to a machine, the machine becomes fulfilled and the target fill factor for remaining machines may be updated (recalculated) excluding the fulfilled machine and the allocated product. This allows remaining machines to be filled up to a new target fill factor level, which drives the remaining machines towards a new mutual balance. Similarly, if some machines are detected to have an under-filling situation, the other machines are driven towards a new higher mutual balance level.

Then the process proceeds to step 501 to check, whether or not there are products in the ordered product list. In another implementation, the process may first check, whether or not there are products in the ordered product list, and perform the recalculating of the fill factors and target fill factor level only if there are at least on product in the ordered product list.

If the initial machine is not under-filled (step 504: no), in the illustrated example the machine that is the most suitable to manufacture the product, i.e. the machine highest in the ordered suitability list for this product, created in step 207 of Figure 2, is taken in step 508. Then it is checked in step 509, whether or not its fill factor (ff) is below the target fill factor level (t-ff). If it is (step 509: yes), the process continues to step 505 to allocate the product to the machine.

If the fill factor of the machine is not below the target fill factor level (step 509: no), it is checked in step 510, whether or not there are one or more machines having lower suitability in the ordered suitability list than the machine whose fill factor was compared in step 509. If there is (step 510: yes), the next highest machine in the ordered suitability test is taken in step 511, and then it is checked, whether or not the machine is under-filled. In other words, the maximum fill factor (max-ff) of the machine is compared with the target fill factor (t-ff). If the machine is under-filled, i.e. the maximum fill factor is below the target fill factor (step 512: yes), the process continues to step 505 to allocate the product to the machine. If the maximum fill factor is not below the target fill factor (step 512: no), the process continues to step 509 to compare the fill factor of the machine with the target level fill factor.

If the machine whose fill factor is not below the target fill is the lowest in the ordered suitability list (step 510: no), from the ordered suitability list a machine having the lowest fill factor is taken in step 513 and the process continues to step 505 to allocate the product to the machine.

When there are no more products (step 501: no) in the ordered product list created in step 204 of Figure 2, the process is exited in step 514, and the balanced processing queues, such as in Figure 6B, are ready and the manufacturing process of the machines producing the products can be controlled accordingly.

In embodiments, in which the check of step 504 is not performed, the process proceeds from step 502 directly to step 508 or from step 503 directly to step 509.

Independent of whether the check of step 504 is or is not performed, the check of step 512 may or may not be performed. In the latter case the process proceeds from step 511 to step 509.

Another object of a scheduling method disclosed herein is optimization of the sequence of batches (runs containing the products, lots). Because of the production process, materials required to complete a product, or the semi-finished product, on a machine may become available just before the due date or several days or even weeks before the due date. This can mean that certain products can be made on time only during a very short time interval as other products have much flexibility. On the other hand, there may be a preferred or optimal sequence in which the products are efficiently or otherwise preferably produced. For example, the requirement may be, but not limited to, producing the batches in an order where the due dates of the products are non-decreasing. There may be also other product-specific requirements. For example, in the case of a finishing line of a paper machine, further requirements may involve sorting of the products based on one or more of a cut size, mother roll width, special properties and so on. A product may have a property in the form of a release date, or an earliest release date, or as a last possible release date, that defines the first or last possible time when a production of a product can start at a certain production phase. As the raw material availability restricts the possible starting times of some of the batches, a straightforward sorting strategy easily leads to a situation where a finishing machine has to wait for the raw materials. This can further mean that some products placed later in the schedule are bound to be late.

To overcome this, methods that take into account these contradicting requirements are described below. The sequence of the batches may be reorganized in a manner that minimizes the raw material (semi-finished product, source material) wait time while preserving the desired sorting order on the batches as far as possible. The method(s) may be performed on a production queue of one machine with due dates and release dates, that is, on a machine schedule containing batches with products that each have a due date and a release date. A production queue may also define a start date, i.e. a time instant the production of the product is actually started, and finish date, i.e. a time instant the product is actually finished, for each product in the queue.

Table 1 shows an example of a machine schedule for a machine to which production of products *A* to *G*.

Table 1:

| product | production starts | product finished | semi- finished product ready | due |
|---------|-------------------|------------------|------------------------------|-----|
| A | t2 | t6 | t1 | t12 |
| B | t7 | t14 | t3 | t12 |
| C | t18 | t24 | t17 | t29 |
| D | t25 | t27 | t14 | t29 |
| E | t28 | t31 | t26 | t32 |
| F | t32 | t34 | t5 | t36 |
| G | t36 | t40 | t35 | t38 |

In table 1, the time slot indicators are numbered in a running order so that the earliest time slot is t1 and the latest t40. The column "production starts" indicates, as the title tells, the time at which the machine starts to manufacture the product in question. The column "product finished" indicates the scheduled end of the manufacturing of the product, i.e. a time when the product is ready. In other words, it indicates the finishing time of the production of the product. The products may be allocated continuously or there may be idle time between the products, as also shown in Table 1, in which there is idle time between manufacturing of products B and C, and F and G. The column "semi-finished product ready" indicates a release date, or release time. The release date may be undefined, meaning that the material is already available at any time. The column "due" indicates a target time, i.e. due date or due time, when the product should at the latest be ready. However, that is not always a case, as also shown in Table 1, in which products B and G are ready after the due time.

If the product is produced after the due date, there will be a cost involved. (As is commonly known, the cost may be something else than a mere monetary value.) In order to minimize the costs involved, a cost may be assigned to each finish date of and product which is after the due date and then calculate a total cost of the products. Then the production of the products may be reorganized in order to minimize the calculated total cost, for example by trying to fill the gaps. For example, sorting the batches to the preferred sequence, as described above, may create gaps, for example material waiting times, into the production queue.

Figure 7 illustrates an example how the schedule created may be reorganized. More precisely, Figure 7 illustrates functionality of a parallel machine scheduling unit that is configured also to reorganize production queues. In the illustrated example each gap is taken into consideration at a time, without limiting the example to such a solution.

Referring to Figure 7, the production queues of parallel machines in a production line are sorted in step 700 to a preferred or optimized order, for example taking into account one or more of the release date and/or the due date, as explained above. The step may be an isolated step, performed separately from the other machine-specific steps illustrated in Figure 7. However, step 700 has to be performed before performing the steps 701 to 710 to a production queue of a machine.

To carry out a gap filling procedure for a sorted production queue of a machine, the queue is taken in step 701 to be processed. The machine is called below also a target machine for the sake of clarity. Then source machines, i.e. machines that may contain batches that could be to be transferred into the production queue of the target machines are determined in step 702. Such source machines may include all machines of the production line, including the one whose production queue is under process, or a subset of the machines in the production line. For example, a machine whose production queue has undergone the process may be excluded.

Then gap search is started in step 703 at a gap search position. The gap search position may be the start time slot of the production queue, for example. Naturally any other search positions may be used. Further, a gap filling list is initialized in step 704. The queue is then searched for finding gaps. All gaps in the schedule can be identified by comparing the start date of each batch to the finish date of the previous batch. Further, it is advantageous to define/set a minimum length for a gap that could be filled. By doing so, it is ensured that small batches are not transferred, since transferring them may not create any advantage.

If a gap, or big enough gap when the minimum length is defined, is found (step 705; yes), suitable batches are searched for in step 706 amongst the production queues of the source machines. A suitable batch fulfils a gap filling criteria. A minimum gap filling criteria includes that only batches containing products that can be produced also on the target machine can be transferred and that the production time in the target machine should not be longer than the gap to be filled. This may require some recalculations, if the production times in the source machine and the target machine are different ones. The gap filling criteria may be set to prevent the transfer of the batches that would create a gap into the production queue of the source machine longer than the gap to be filled. A further example what the gap filling criteria may include is to allow a transfer of a batch into a gap inside the same machine only if the same batch has not been previously transferred. This prevents the method from transferring batches back and forth inside the same gap.

During the search, if one or more suitable batches are found (step 707: yes), information on each found suitable batch is copied in step 708 to the gap filling list. The information may include the machine supposed to manufacture the batch, release date, due date and information indicating the product and the production time in the target machine or the duration of the batch in the source machine.

When the batches in all source machines have been searched for, i.e. the gap filling list is ready, the gap filling list is sorted in step 709 according to the preferred order used in step 700, and then the batch that is the first one after sorting is transferred from its original (previous) allocation to the gap found in step 705. The transferring includes deleting the batch from the original production queue. It is important to notice that due to the release dates, transferring of any batch into a gap can possibly create two new gaps: one before the release date of the transferred batch and a second after the transferred batch finish time. The process described herein handles the filling of these gaps by recursive implementation caused by continuing the process in step 703 after step 710, i.e. by starting the gap search again from the gap search position that was used when the gap that was filled, or at least partly filled, in step 710.

If no suitable batches are found (step 707: no), the gap search position is moved in step 711 towards the end of the production queue, for example to the next time slot or to the end of next batch, and then the process returns to step 705 to check, whether or not a gap, or big enough gap when the minimum length is defined, is found.

If a gap, or big enough gap when the minimum length is defined, is not found (step 705; no), the process is exited in step 712 for the production queue that was taken in step 701 to be processed. Naturally the process may be repeated to other production queues.

It should be appreciated that in the above process a gap can also be filled completely or be shortened by having a new later start date.

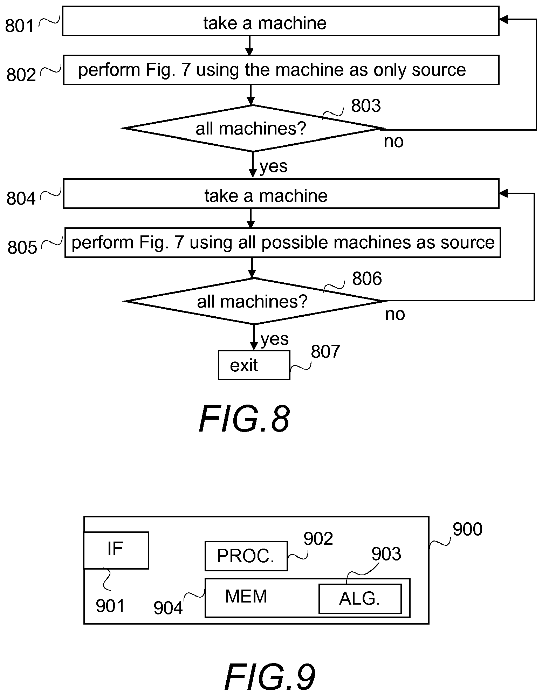

The schedules of all finishing machine may be reorganized in a sequence, where each machine at a time is first set as the target machine and only the same machine is used as a source machine. In an optional second stage all machines at a time may be set as the target machine and all machines are set as source machines. This allows the gap filling method to prioritize the batches on the same machine, thus preventing the workload balance between the machines from deteriorating due to the gap filling method. Figure 8 illustrates functionality of a parallel machine scheduling unit that is configured to implement both of the sets.

Referring to Figure 8, a machine amongst the parallel machines in a production line is taken in step 801 to be the machine whose schedule (production queue) is reorganized. Then the above described functionality of Figure 7 is performed in step 802 using the machine itself as the only source wherefrom batches to fill gaps can be taken. These two steps are repeated (step 803: no) until all the parallel machines have undergone the process (step 803: yes) and the process continues to step 804 to perform the second stage.

Then the second stage is performed by taking in step 804 a machine amongst the parallel machines in the production line to be the machine whose schedule (production queue) is reorganized. Then the above described functionality of Figure 7 is performed in step 805 using all of the parallel machines in the production line as sources wherefrom batches to fill gaps can be taken. These two steps are repeated (step 806: no) until all the parallel machines have undergone the process (step 806: yes) and the process is exited in step 807.

The steps and related functions described above in Figures 2, 3, 4, 5, 7 and/or 8 are in no absolute chronological order, and some of the steps may be performed simultaneously or in an order differing from the given one. Other functions can also be executed between the steps or within the steps, and other information may be sent. Some of the steps or part of the steps can also be left out or replaced by a corresponding step or part of the step. One example is, that if after the initial allocation, (after step 212: yes) it is detected that the initial allocation is balanced enough, by comparing a maximum number of time slots available in a machine with a minimum number of time slots available in a machine (in Figure 6A, machines would be 8 and 4 or 7) and if the difference exceeds a threshold, the further steps are not performed. A further example is that the maximum fill factors are not used, i.e. step 215 is omitted, and correspondingly steps 504 and 512 are omitted so that the process continues from step 503 to step 508 and from step 511 to 509. Another example is that the formula (4) is used to calculate the performance indicator of the initial allocation before performing the balancing, i.e. before step 216, after step 217, and if the performance indicator value indicates a good enough performance, the balancing is not performed. Still a further example is that, before calculating the fill factors and target fill factor levels in step 507 in Figure 5, it may be checked, whether the product was allocated to the intended machine, and if yes, then it is possible to skip over step 507.

As is evident from the above, the disclosed processes divide a given set of products to be manufactured to a plurality of non-overlapping subsets that are manufactured by parallel machines in a production line.

The techniques described herein may be implemented by various means so that an apparatus/device implementing one or more functions described with an embodiment, or a combination of embodiments, comprises not only prior art means, but also specific means for implementing the one or more functions described with an embodiment and it may comprise separate means for each separate function, or specific means may be configured to perform two or more functions. The specific means may be software and/or software-hardware and/or hardware and/or firmware components (recorded indelibly on a medium such as read-only-memory, or embodied in hard-wired computer circuitry) or combinations thereof. Software codes may be stored in any suitable, processor/computer-readable data storage medium(s) or memory unit(s) or article(s) of manufacture, and executed by one or more processors/computers, hardware (one or more apparatuses), firmware (one or more apparatuses), software (one or more modules), or combinations thereof. For a firmware or software, implementation can be through modules (e.g. procedures, functions, and so on) that perform the functions described herein.

Figure 9 is a simplified block diagram illustrating some units for a device (an apparatus) 900 configured to be a production control apparatus, or a corresponding computing device, comprising at least one or more parallel machine scheduling units described above with Figures 1 to 8 or corresponding functionality or some of the corresponding functionality, if functionalities are distributed in the future. In the illustrated example, the device comprises one or more interfaces (IF) 901 for receiving and/or retrieving and/or transmitting information from or to other devices, including machines scheduled, and possibly from or to a user, a processor 902 configured to implement the parallel machine scheduling unit, described herein, or at least part of corresponding functionality as a sub-unit functionality if distributed scenario is implemented, with corresponding algorithms 903, and memory 904 usable for storing a computer program code required for the one or more parallel machine scheduling units, or for one or more corresponding units or sub-units, i.e. the algorithms for implementing the functionality, or at least part of the functionality. The memory 904 is also usable for storing other possible information, like the machine characteristics, product type definitions, production queues, different temporary information, etc.

In other words, a device (apparatus) configured to provide the production control apparatus, or a device/apparatus configured to provide one or more corresponding functionalities described above with Figures 1 to 8, is a computing device that may be any apparatus or device or equipment or node configured to perform one or more of the corresponding functionalities described above with an embodiment/example/implementation, and it may be configured to perform functionalities from different embodiments/examples/implementations. The one or more parallel machine scheduling units, as well as corresponding units and sub-units may be separate units, even located in another physical apparatus, the distributed physical apparatuses forming one logical apparatus/device providing the functionality, or integrated to another unit in the same apparatus/device.

The device/apparatus configured to provide the production control apparatus, or a device/apparatus configured to provide one or more corresponding functionalities described above may generally include a processor, controller, control unit, micro-controller, or the like connected to a memory and to various interfaces of the apparatus. Generally, the processor is a central processing unit, but the processor may be an additional operation processor. The unit, or each or some or one of the units/sub-units and/or algorithms described herein may be configured as a computer or a processor, or a microprocessor, such as a single-chip computer element, or as a chipset, including at least a memory for providing storage area used for arithmetic operation and an operation processor for executing the arithmetic operation. The unit, or each or some or one of the units/sub-units and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), logic gates and/or other hardware components that have been programmed and/or will be programmed by downloading computer program code (one or more algorithms) in such a way to carry out one or more functions of one or more embodiments/implementations/examples. An embodiment provides a computer program embodied on any client-readable distribution/data storage medium or memory unit(s) or article(s) of manufacture, comprising program instructions executable by one or more processors/computers, which instructions, when loaded into a device/apparatus, constitute the parallel machine scheduling unit, or any sub-unit. Programs, also called program products, including software routines, program snippets constituting "program libraries", applets and macros, can be stored in any medium, and may be downloaded into a device/apparatus. In other words, the unit or each or some or one sub-units and/or the algorithms described above may be an element that comprises one or more arithmetic logic units, a number of special registers, and control circuits.

Furthermore, the device/apparatus configured to provide production control apparatus, or a device configured to provide one or more corresponding functionalities, described above with Figures 1 to 8, may generally include volatile and/or non-volatile memory, for example EEPROM, ROM, PROM, RAM, DRAM, SRAM, double floating-gate field effect transistor, firmware, programmable logic, etc., and typically store content, data, or the like. The memory or memories may be of any type (different from each other), have any possible storage structure and, if required, be managed by any database management system. In other words, the memory, or part of it, may be any computer-usable non-transitory medium within the processor/apparatus/device or external to the processor/apparatus/device, in which case it can be communicatively coupled to the processor/apparatus/device via various means as is known in the art. Examples of an external memory include a removable memory detachably connected to the apparatus, a distributed database, and a cloud server. The memory may also store computer program code such as software applications (for example, for the unit or for the one or more sub-units/algorithms) or operating systems, information, data, content, or the like for the processor to perform steps associated with operation of the apparatus, in accordance with the examples/embodiments.

It will be obvious to a person skilled in the art that, as technology advances, the inventive concept can be implemented in various ways. The invention and its embodiments are not limited to the examples described above, but may vary within the scope of the claims.

**Claims**

**1.** A computer implemented method for scheduling manufacturing of a set of products to be manufactured in a production line comprising a plurality of parallel machines, the method comprising performing, by a controlling apparatus, in response to receiving information on a set of products to be manufactured, the following:

obtaining information on machine characteristics of the plurality of the parallel machines that indicates one or more product types manufacturable by a corresponding machine;
obtaining information on product type definitions of a plurality of different products;
estimating a time interval for production of the set of products;
determining for each machine in the parallel set of machine a production queue;
creating an ordered product list from the set of products;
performing initial allocation for each product in the ordered product list, starting from the highest product, the initial allocation comprising:

- determining product type using the product type definitions;
- determining ordered suitability list of machines for the product using at least one of the machine characteristics and the product type definitions, the ordered suitability list comprising one or more machines amongst the plurality of machines capable to manufacture the product; and
- using the ordered suitability list to initially allocate the product to a production queue of a highest possible machine in the ordered suitability list;

calculating, using the initial allocations, fill factors for each machine and a target fill factor level;
allocating each product in the ordered product list, according to the order in the product list, to a production queue of one of the machines, the one of the machines being selected based on the fill factors, the target fill factor level, and suitability and availability of the machines, wherein the fill factors and the target fill factor level are recalculated after a product has been allocated and before allocating the next product; and
scheduling the manufacturing of the products in the set of products according to the production queues.

**2.** A computer implemented method as claimed in claim 1, wherein the calculating the fill factors and the target fill factor levels comprises:

calculating, by the controlling apparatus, a fill factor for a machine as a fill factor percentage representing a ratio between a machine time required for manufacturing products allocated to the machine within the time interval estimated and a machine time available during the time interval estimated; and
calculating, by the controlling apparatus, at least one target fill factor level as an average of the calculated fill factor percentages.

**3.** A computer implemented method as claimed in claim 1 or 2, wherein selecting, by the controlling apparatus, the one of the machines comprises allocating the product to a production queue of a machine that is the highest in the suitability list whose fill factor is below the target fill factor level, and if no such machine is found, to a machine in the suitability list that has the lowest fill factor.

**4.** A computer implemented method as claimed in any preceding claim, further comprising:

calculating, by the controlling apparatus, for each machine a maximum fill factor that is a fill factor calculated assuming that all possible products would be allocated to the machine;
comparing, during allocating a product, by the controlling apparatus, a maximum fill factor of the machine to whose production queue the product was initially allocated with the target fill factor level; and
if the maximum fill factor is smaller than the target fill factor level, allocating the product to the machine.

**5.** A computer implemented method as claimed in any preceding claim, wherein creating the ordered product list comprises, when one of the following time limits whose values are received for the set of products is used, the time limits being a due date representing a time instant at latest at which the product is desired to be completed and a release date representing a time instant a source material is ready for production and the production of the product can start:

sorting the products by their time limit values to an ascending order;
for those of the products sharing the same time limit value, determining a number of machines capable of manufacturing the product, and sorting the orders by the number to an ascending order; and
for those of the products sharing the same time limit value and the same number of machines, determining for each product a preferred machine amongst the suitable machines and a production time of the product in the preferred machine, and sorting the products by the production times in a descending order.

**6.** A computer implemented method as claimed in any preceding claim, further comprising:

sorting, by the controlling apparatus, before the scheduling, each production queue to a preferred order by taking into account a due date representing a time instant at latest at which the product is desired to be completed, a release date representing a time instant a source material is ready for production and the production of a product can start, and a production time of the product in the machine in question; and
reorganizing, by the controlling apparatus, before the scheduling, one or more production queues by performing, by the controlling apparatus, the following for each production queue to be reorganized:

- determining, for a production queue, source machines from whose production queues batches may be transferred to a gap found in the production queue;
- repeating for the production queue the following:

searching for a gap from a search position;
searching, in response to detecting a gap, for batches that can be transferred to the gap;
if one or more batches are found, sorting batches found according to the preferred order, transferring the first one to the production queue, and restarting the searching from the same search position; and
if no batches are found; moving the gap search position towards the end and starting the searching for a gap from the new gap search position until the end is reached.

**7.** A computer implemented method as claimed in claim 6, further comprising:

performing, by the controlling apparatus, the reorganizing in two phases, wherein:

the first phase comprises for each production queue determining for each machine the source machine to be the machine whose production queue is under process, and performing the reorganizing; and
the second phase is performed after the first phase has been completed and comprises for each production queue determining for each machine the source machines to be all possible machines in the production line, and performing the reorganizing.

**8.** A computer program product comprising program instructions, which, when run on a computing apparatus, causes the computing apparatus to perform a method as claimed in any preceding claim upon receiving information on a set of products to be manufactured.

**10.** A controlling apparatus for scheduling manufacturing of a set of products to be manufactured in a production line comprising a plurality of parallel machines, the controlling apparatus comprising means for receiving information on a set of products to be manufactured and means for implementing a method as claimed in any of claims 1 to 7.

**11.** A controlling apparatus as claimed in claim 11 or 12, the controlling apparatus comprising at least one processor; and one memory including computer program code, wherein the at least one memory and the computer program code are configured to, with the at least one processor, provide the means for implementing.

**12.** A system comprising at least:

a production line comprising a plurality of parallel machines and at least one source machine, wherein the plurarity of parallel machines may be scheduled to manufacture products from a source material received from the at least one source machine;
memory for storing at least one of information on machine characteristics of the plurality of the parallel machines that indicates one or more product types manufacturable by a corresponding machine, and information on product type definitions of plurality of different products; and
a controlling apparatus as claimed in claim 10 or 11 for scheduling manufacturing of a set of products to the production line.

**13.** A system as claimed in claim 12, wherein the plurality of parallel machines are of heterogeneous type.

**FIG.1**

receive set of products to be manufactured — 201

↓

estimate time interval — 202

↓

determine production queues — 203

↓

create ordered product list — 204

↓

take product — 205

↓

determine product type — 206

↓

determine ordered suitability list — 207

↓

take highest in suitablity list — 208

↓

209 free? — no → take next highest — 210

↓ yes

allocate initially — 211

↓

212 all in set? — no →

↓ yes

calculate fill factors — 213

↓

calculate target fill factor level — 214

↓

calculate maximum fill factors — 215

↓

perform balancing — 216

*FIG.2*

301 — sort products in ascending time limit order

302 common time limit? — no

↓ yes

303 — determine number of machines for products

304 — sort products in ascending number order

305 same number? — no

↓ yes

306 — determine preferred machine and production time

307 — sort in descending production time order

308 — exit

## FIG.3

401 — take machine, initialize temporary queue

402 — take product

403 possible? — no

↓ yes

404 free? — no

↓ yes

405 — allocate to temporary queue

406 all products? — no / yes

407 — calculate maximum fill factor

## FIG.4

FIG.5

| 1 | a | | b | c | | d | e | | 601 |
|---|---|---|---|---|---|---|---|---|---|

**FIG.6A**

**FIG.6B**

sort production queues to preferred order — 700

take sorted production queue of machine — 701

determine source machines — 702

start at gap search position — 703

initialize gap filling list — 704

gap found? — 705

no → exit — 712

yes

search for suitable batches — 706

any? — 707

yes → copy info on each found to gap filling list — 708

sort according to order — 709

transfer 1st from original to gap — 710

no → move gap search posiotion — 711

**FIG.7**

801 ~ take a machine

802 ~ perform Fig. 7 using the machine as only source

803 all machines? — no

yes

804 ~ take a machine

805 ~ perform Fig. 7 using all possible machines as source

806 all machines? — no

yes

807 exit

*FIG.8*

900

IF

PROC. 902

903

901  904  MEM  ALG.

*FIG.9*

Europäisches
Patentamt
European
Patent Office
Office européen
des brevets

**EUROPEAN SEARCH REPORT**

Application Number

EP 17 18 6673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/096770 A1 (CHUA TAY J [SG] ET AL) 5 May 2005 (2005-05-05) * abstract * * paragraph [0003] - paragraph [0005] * * paragraph [0008] * * column 12 - column 16 * * paragraph [0044] - paragraph [0047] * * paragraph [0049] * * paragraph [0054] - paragraph [0057] * * paragraph [0062] * | 1-13 | INV. G06Q50/04 |
| A | US 2006/282343 A1 (PALANISAMY LINGATHURAL [IN] ET AL) 14 December 2006 (2006-12-14) * the whole document * | 1-13 | |
| A | US 2017/004438 A1 (PARK CLEMENS [CA] ET AL) 5 January 2017 (2017-01-05) * the whole document * | 1-13 | |

TECHNICAL FIELDS
SEARCHED     (IPC)

G06Q

The present search report has been drawn up for all claims

| Place of search | Date of completion of the search | Examiner |
|---|---|---|
| The Hague | 16 October 2017 | Falierou, Christina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 18 6673

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2017

| Patent document cited in search report | | Publication date | Patent family member(s) | | Publication date |
|---|---|---|---|---|---|
| US 2005096770 | A1 | 05-05-2005 | NONE | | |
| US 2006282343 | A1 | 14-12-2006 | NONE | | |
| US 2017004438 | A1 | 05-01-2017 | EP | 3113089 A1 | 04-01-2017 |
| | | | US | 2017004438 A1 | 05-01-2017 |
| | | | WO | 2017002098 A1 | 05-01-2017 |

EPO FORM P0459

For more details about this annex : see Official Journal of the European Patent Office, No. 12/82